# EUROPEAN PATENT APPLICATION

(11) **EP 4 821 740 A1**
(43) Date of publication of application: **14.10.2026**
(21) Application number: 25170141.3
(22) Date of filing: 11.04.2025
(51) Int. Cl.: B60L 3/00, B60L 3/04, B60L 53/31, B60L 53/67, H02J 1/10, H02J 7/00

(54) **SAFETY CONTROL DEVICE FOR POWER MANAGEMENT SYSTEM**

(71) Applicant: Siemens Aktiengesellschaft, 80333 München (DE)
(72) Inventor: ATABAO, Jorge, 2640-539 Mafra, Lisboa (PT); ANTUNES DE OLIVEIRA, Nuno Filipe, 2855-717 Corrois (PT); AGULHA, Pedro, 2680-170 Camarate (PT)
(74) Representative: Siemens Patent Attorneys

(57) **Abstract**

There is described a safety control device (100) for a power management system (200) with a plurality of power modules (110) that are connectable via a power router device (130) to at least one output (120), wherein the safety control device (100) is configured to:
i) identify the electric paths of the power modules (110) allocated to the at least one output (120) via the power router device (130);
ii) in case of a safety-related issue, select the respective electric path of the identified electric paths associated with the safety-related issue; and
iii) individually shut down the selected electric path.

Further, the power management system (200) and a method of operating the power management system (200) are described.

## Description

### Field of the Invention

The invention refers to a safety control device for a power management system with a plurality of power modules that are connectable via a power router device to at least one output. The safety control device is configured to identify the electric paths of the power modules allocated to the at least one output via the power router device; in case of a safety-related issue, select the respective electric path of the identified electric paths associated with the safety-related issue; and individually shutdown the selected electric path. The invention further relates to a power management system that comprises the safety control device and a method of operating such a power management device.

The invention can hence relate to the technical field of power management systems, in particular with respect to electromobility.

### Technical Background

Electromobility (E-mobility) refers to the use of electric vehicles (EVs) and the infrastructure that supports their operation. A critical component of this system is EVSE (Electric Vehicle Supply Equipment), which provides the interface between the electrical grid and an EV for safe and efficient charging. EVSE include various charging solutions, ranging from AC chargers (used in homes and workplaces) to DC fast chargers (found in public charging stations for rapid energy transfer). An EVSE ensures proper connection between the electric vehicle and the power source, regulates voltage and current, and includes safety mechanisms such as ground fault protection and overcurrent detection.

Most of the current EVSEs comprise several power modules (such as AC/DC converters) that are connected to one or more outputs (such as a charging cable) via a matrix of contactors (the so-called switching matrix), e.g., the Sicharge D system. The power router and/or switching matrix can hereby join the power of one or more power modules (via one or more contactors) to a given output, thus increasing or decreasing the available power according to what the vehicle being charged is requesting. On the basis of this, a software/algorithm is needed to control the power modules (in particular their voltage/current setpoints) and to close/open the contactors within the switching matrix.

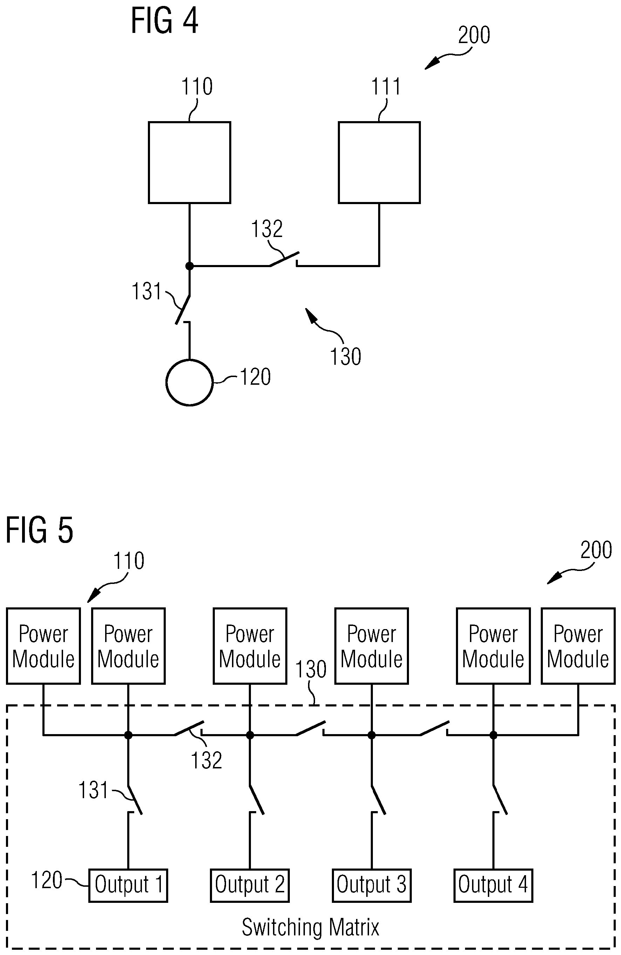

Figure 4 shows the basic principle of a power management system 200 that comprises two power modules: a first power module 110 and a second power module 111. The power management system 200 further comprises an output 120 to which the first power module 110 and/or the second power module 111 can be connected. For this purpose, the power management system 200 comprises two switches (contactors): a first switch 131 to connect the first power module 110 and/or the second power module 111 to the output 120, and a second switch 132 to connect the first power module 110 with the second power module 111. Accordingly, in this basic example, one or both power modules 110, 111 can be allocated to an electric path to the output 120, depending on the required output power (e.g. charging one or two vehicles at the same time).

Figure 5 shows a power management system 200 configured as a charging station as an example of an EVSE. As described above, the charging station 200 comprises a plurality of power modules (e.g. AC/DC converters) 110. Further, the charging station 200 comprises a plurality of outputs (e.g. charging cables) 120. The plurality of switches 131, 132 are organized as a power router device 130 (generally called "switching matrix"). The power router device 130 enables a plurality of interconnections between the power modules 110, 111 and the outputs 120. While first switches 131 enable connection between output 120 and power module 110, second switches 132 enable connection between the power modules 110, 111. It becomes clear that a large variety of electric paths (between the power modules 110, 111 and the outputs 120) can be provided by the power router device 130.

Conventionally, in case of a safety-related issue, for example a short circuit or an overcurrent, the power management system is shut down. For example, a human-machine interface, such as a push button, is provided at the charging station that can be pressed in case of emergency. In a further example, the charging station can comprise an emergency system that automatically shuts down when a safety-related issue is detected.

However, as described above, the power management system can become quite complex, for example comprising a main station and a plurality of dispenser stations, wherein power modules of the main station are electrically connected (through the power router device) to respective outputs (e.g. charging cables) at the dispenser stations. In such a complex situation, an emergency shutdown would immediately kill all ongoing charging operations.

This situation may be very time and energy consuming, for example, when the power management system is distributed over a whole parking lot and a plurality of vehicles are charged at the same time. Hence, even though multiple EVSE cabinets are used in parallel, an issue at only one dispenser station would lead to a shutdown of all whole charging procedures.

Conventionally, if an emergency occurs, all power outputs are shut down to ensure safety and prevent further damage. This can be done via a centralized emergency stop system that cuts power to all connected charging stations. By using switching elements, such as relays, in an external switching matrix, a system can be provided that monitors and controls multiple charging stations. However, this requires a lot of cabling, as each relay must be wired correctly to the corresponding system, making it complex and costly.

### Summary of the invention

There may be a need to operate a power management system in an efficient and safe manner.

A device, a system, a method, and a data program product are described in the following.

According to a first aspect of the invention, there is described a safety control device (in particular a hardware, e.g. a semiconductor device such as a processor on/in a circuit board or a logic circuit) for a power management system (e.g. an EVSE) with a plurality of power modules (e.g. power converters) that are connectable via a power router device (comprising a plurality of switching elements, e.g. a power router and/or a switching matrix) to at least one output (e.g. a charging cable), wherein the safety control device (comprises at least one processor that) is configured to:
i) identify/map the electric paths of the power modules allocated/connected to the at least one output via the power router device (in particular mimic the configuration of the power router device);
ii) in case of a safety-related (power) issue (e.g. an overcurrent), select the respective electric path of the identified electric paths associated with the safety-related issue; and
iii) individually shut down (turn off, stop, deactivate, disable) the selected electric path (associated with the safety-related issue) (in particular shut down the respective power modules and/or open the respective switches).

According to a second aspect of the invention, there is described a power management system (e.g. an EVSE), comprising:
i) a safety control device as described above;
ii) the plurality of power modules (at least two);
iii) the at least one output (in particular a plurality of outputs);
iv) the power router device, configured to connect the plurality of power modules and the at least one output for providing the (plurality of) electric paths.

According to a third aspect of the invention, there is described a method of operating a safety control device for a power management system (in particular with a plurality of power modules that are connectable via a power router device to at least one output), wherein the method comprising:
i) identifying/mapping the electric paths of the power modules allocated to (connected to) the at least one output via the power router device;
ii) in case of a safety-related issue, selecting/identifying the respective electric path of the identified electric paths associated with the safety-related issue; and
iii) individually shutting down the selected electric path.

According to a fourth aspect of the invention, there is described a computer program product, configured to perform, when used on a computer (in particular comprising at least one processor), a method as described above. In an embodiment, such a computer program product may also be used in the control system described above.

According to a fifth aspect of the invention, there is described a data processing device (in particular comprising at least one processor), configured to perform a method as described above.

In the context of the present document, the term "safety control device" may in particular refer to a hardware/software element suitable for a safety control function with respect to a power management system. In an embodiment, the safety control device is configured as a hardware that can be coupled with (a control device of) the power management system. For example, the safety control device may comprise a semiconductor device for performing logic operations, e.g. a processor and/or a logic circuit and/or a FGPA. In an example, the semiconductor device may be mounted on and/or embedded in a printed circuit board (PCB). In another embodiment, the safety control device may be realized as a hardware/software in (a processor of) a control device of the power management system. In an embodiment, the safety control device may be configured to mimic/copy the configuration of the power router device, for example by using a dedicated power router mirror device. Thereby, the established electric paths (which power module is allocated to which output) may be efficiently mapped. In an embodiment, the safety control device may be coupled (electrically connected) to the power router device (power router and/or "switching matrix") and/or the control device (e.g. "DC controller") of the power management system (in particular between these devices). In an embodiment, the safety control device may be used as a versatile module that can be coupled to a power management system (e.g. in the main cabinet of the charging station) in a flexible manner.

In the context of the present document, the term "power management system" may in particular refer to a system/arrangement, wherein at least one power module can be electrically connected to an output via a switch. Such a power management system may comprise a plurality of power modules and switches, so that a large variety of electric paths between power module(s) and output is possible. Accordingly, an efficient management/control may be crucial to organize the connections in such a manner that the required electric paths (with the desired power) can be provided. In other words, different power modules can be allocated to an electric path, connecting said power modules to an output. An example of such a power management system may be a charging station in an electromobility application. Hereby, the main charging station (with the power modules) may be connected to one or more dispenser stations (with one or more respective outputs).

In the context of the present document, the term "power module" may in particular refer to a device that is suitable to manage power conversion and/or regulation, in particular between an electrical grid and an electric vehicle battery. A power module may for example comprise a power converter, in particular at least one of an AC/DC converter, a DC/DC converter, a DC/AC converter. In an embodiment, one or more power modules may be arranged in a (cabinet of a) charging station.

In the context of the present document, the term "output" (or output device/module) may in particular refer to a device suitable as an interface to provide power from the power module, for example to an electric vehicle. In an embodiment, the output may comprise at least one of a charging cable, a connector, a connector for a charging cable, a plug. In a further example, the output may comply with a specific (e-mobility) standard.

In the context of the present document, the term "power router device" may in particular refer to a device configured to (electrically) connect a power module and an output (in particular a plurality of power modules and outputs) as defined above. In an embodiment, a power router device may comprise a plurality of switching elements (for example contactors) in order to establish the electric paths between power modules and outputs. In case a plurality of power modules are connected to a plurality of outputs, the number of possible electric paths can be quite high, and the interconnection may become a complex task. In an embodiment, the power router device may comprise a power router and/or a switching matrix.

In the context of the present document, the term "control device" may in particular refer to a hardware/software/controller configured to manage the above described power management system (such as a charging station). In an embodiment, the control device may be implemented as one or more processors or a controller or a logic circuit. The control system may be arranged in a charging station or may operate (at least partially) from remote, e.g. in a control station. In a preferred embodiment, the control device may be coupled or couplable with the safety control device.

According to an exemplary embodiment, the invention may be based on the idea that a power management system can be operated in an efficient and safe manner, when a safety control device is provided that identifies the electric paths (which power module is connected to which output) established by the power router device and, in case of a safety-related issue, shuts down selectively/individually only/exclusively the electric path that is associated with said safety-related issue. Such a safety control device may be applied in a flexible manner to a plurality of different power management systems that connect power modules via switches to outputs.

Conventionally, if an emergency occurs, all power outputs are shut down to ensure safety and prevent further damage. This can be done via a centralized emergency stop system (e.g. a shutdown device and/or a shutdown global circuit) that cuts power to all connected charging stations (alternatively, each charging station may have a switching device on the main circuit, so shutdown can be done locally). Nevertheless, such an approach may be time and energy consuming, for example when a plurality of vehicles is charged at the same time. Further, such an abrupt shut down of all power devices may damage the devices (in particular power modules and switches), especially over the long term.

Using the described safety control device, it may be possible to shut individually each output, thereby enabling normal operations of the other electric paths not affected by the safety-related issue. The safety control device may be implemented in a flexible manner. For example, the individual shutdown may be restricted to dispenser stations, while a complete shutdown may still be used in case the safety-related issue is associated with the main charging station. In an embodiment, the safety control device may recognize which power module is allocated to each output, so that mapping of the electric path may be done in a highly efficient manner, reducing cabling and required devices. In a further embodiment, the safety control device may be connected in an application-flexible manner to a global/local shutdown system of the power management system, e.g. the DCS global circuit, between cabinets to shut down the power modules allocated for the specific output.

The disclosure may take in particular into account the high electric loads during system operation by adjusting the shut down time (e.g. introducing a delay). Thereby, the lifetime of the components (in particular power modules and switches) may be significantly increased.

Even though the power management system is described here in the context of electromobility, this is just an exemplary embodiment. In principle, the disclosure may be used in any system, where power modules are connected, via switches, to an output for establishing an electric path. Another application may be for example charging a railway vehicle; for example, the vehicle is charged via the pantograph connected to the EVSE. The pantograph may therefore replace a traditional plug.

### Exemplary Embodiments

In an embodiment, the safety control device comprises (is configured as) a printed circuit board (PCB) and/or at least one semiconductor device, in particular a processor and/or a logic circuit and/or a Field-Programmable Gate Array (FGPA). The semiconductor device(s) may be mounted-on and/or embedded in the PCB. This may provide the advantage that the safety control device may be provided as a versatile module that may be implemented in a plurality of different applications in a flexible manner. Further, such a safety control device may be manufactured in a straightforward and cost-efficient manner.

In an embodiment, the safety control device comprises: a power router mirror device (power router mirror matrix), configured to mimic the configuration (switch positions) of the power router device. Thereby, the safety control device may identify/map the electric paths in an efficient and easy manner. In an embodiment, the power router mirror device is couplable/coupled to the power router device, in particular via a safety logic (circuit). Thus, the power router device configuration may be easily accessible for the power router mirror device and may be copied in a straightforward manner. This approach may render a complex cabling and associated devices obsolete.

In an embodiment, the safety control device is configured to be coupled (is coupled) to at least one of the following devices of the power management system: a control device (in particular a DC controller), a shutdown device (e.g. a human-machine interface such as an emergency push button, a circuit breaker, etc.), a shutdown global circuit (e.g. the DCS global circuit/line), at least one shutdown local line, the power router device, the one or more power module(s). This may provide the advantage that the safety control device may be coupled/connected directly to the (safety) relevant components of the power management system. Thereby, an efficient and reliable integration into an existing system may be enabled.

In an embodiment, the power router mirror device is configured to map the connections of the shutdown global circuit and/or at least one shutdown local line to the corresponding power modules. This may provide the advantage that the safety control device may interact with (complement) the (already existing) shutdown global/local circuit, thereby being more efficient.

In an embodiment, the safety control device is configured to shut down individually the at least one power module allocated to the selected electric path associated with the safety-related issue. In an embodiment, the safety control device is configured to open individually at least one switch in the selected electric path associated with the safety-related issue. In an embodiment, the safety control device is configured to shut down individually the output of the selected electric path associated with the safety-related issue. In an embodiment, the safety control device is configured to shut down individually the dispenser station corresponding to the selected electric path associated with the safety-related issue. Thereby, the safety control device may control/trigger the individual shut down in an efficient and reliable manner.

In an embodiment, the power management system comprises a main station comprising at least one power module, in particular the plurality of power modules. In an embodiment, the power management system comprises at least one dispenser station, coupled to the main station, and comprising at least one output. In an embodiment, at least one identified electric path connects at least one power module of the main station with the at least one output of the dispenser station. Hence, the safety control device may be directly implemented in a complex and economically/technically important charging application.

In an embodiment, the power management system further comprises a main station (e.g. charging station), in particular comprising the at least two power modules. In an embodiment, the power management system further comprises at least one dispenser station, in particular (electrically) coupled to the main station. The dispenser station may comprise at least one output. In an embodiment, the dispenser station is free of the power module(s). In an embodiment, the identified electric path connects the at least one power module in the main station with the at least one output in the dispenser station.

For example, in an electromobility context, a charging station may be connected to one or more dispenser stations, thereby spatially distributing the charging locations. An illustrative example may be a parking lot, where a plurality of dispenser stations are distributed, so that at each parking space, an electric vehicle can be charged. Using the described system, even a large power management system (e.g. comprising three main stations and three dispenser stations per main station, each with two or more outputs, e.g. 18 outputs in total) can be efficiently managed. The described system may enable a high degree of modularity, so that more and more dispenser stations (and power modules) may be added without changing the safety control device.

In an embodiment, the power management system, further comprises a further main station comprising a further plurality of power modules. In an embodiment, the power management system, further comprises at least one further dispenser station, coupled to the further main station, and comprising at least one further output. In an embodiment, at least one further identified electric path connects at least one further power module of the further main station with at least one further output of the further dispenser station and/or with the main station. In an embodiment, the main station and the further main station are coupled/connected. This may provide the advantage that a highly complex (modular) system may be provided that may still be efficiently and reliably safety controlled.

In an embodiment, the main station comprises the safety control device and the further main station comprises a further safety control device. In an embodiment, the main station and the further main station comprise the safety control device as a common/shared device. Thereby, the flexibility of applications may be increased. In an example, each main station may comprise its own safety control device. In another example, the main stations share a common safety control device.

In an embodiment, the power management system further comprises a shutdown device and/or a shutdown global circuit and/or at least one shutdown local line, configured to shut down the electric power, in particular all power modules of the plurality of power modules. Such an emergency device (e.g. implemented as a push button) may enable a complete shutdown. In an embodiment, the functionalities of the safety control device and the shutdown device may complement each other. For example, while the safety control device may enable individual shutdown (for example regarding a dispenser station, or a lower overcurrent), the shutdown device may enable complete shutdown (for example regarding the main station, or a higher overcurrent). Both devices may be (functionally and/or physically) separated or coupled with each other. In an embodiment, the safety control device and the shutdown device may be coupled to or implemented in the shutdown global circuit.

In an embodiment, the (control system/device of the) power management system is configured so that the safety control device is (in particular only/exclusively) applied in case of a safety-related issue with respect to the at least one dispenser station. In an embodiment, the shutdown device and/or the shutdown global circuit and/or at least one shutdown local line is (in particular only/exclusively) applied in case of a safety-related issue with respect to the at least one main station. Thereby, a balance between high safety and efficient operation may be provided. In other words, the complete shutdown is only applied for highly relevant/dangerous safety issues, e.g. affecting the main station.

In an embodiment, the method further comprises individually shutting down the selected electric path (in particular at least one of the allocated at least one power module, at least one switch in the electric path, the at least one output/dispenser), when the safety-related issue is associated with a dispenser station. In an embodiment, the method further comprises shutting down all electric paths (in particular all power modules/outputs), when the safety-related issue is associated with a main station (in particular by a shutdown device and/or shutdown global circuit and/or at least one shutdown local line).

In an embodiment, the power management system is configured for an electromobility application, in particular electric vehicle charging, application. For example, the power management system may be configured as an EVSE, e.g. a charging station, in particular with one or more dispenser stations, as described above.

In an embodiment, the output comprises at least one of: a charging cable, a connector, a connector to a charging cable, a plug, an interface. In an embodiment, at least one of the switching elements (switches) is configured as at least one of a contactor, a relay, a connector/disconnector, selector, breaker.

In an embodiment, at least one of the power modules comprises at least one of: an AC/DC converter, a DC/DC converter, a DC/AC converter. These may be some examples of favorable embodiments within a power system, in particular regarding electromobility, that may be technically and economically important.

In an embodiment, the power router device comprises at least two switches, in particular including a first switch to connect at least one power module to the output and/or a second switch to connect at least two power modules.

In an embodiment, the safety-related (power) issue comprises at least one of the following: a short circuit, an overcurrent, an overvoltage, a thermal overload, a fire risk, a ground fault, a leakage current, a material failure, an insulation fault. Thereby, the power management system may efficiently deal with common and dangerous safety issues.

In an embodiment, the safety control device is arranged in the main station and/or the further main station. In an embodiment, the safety control device is connected to, in particular coupled between, at least one of the control device, the power router device, the shutdown global circuit, at least one shutdown local line.

In an embodiment, the control system is further configured to turn off (shut down) the at least one power module allocated to the electric path, in particular all power modules allocated to the electric path, before opening/closing the at least one switch in the identified electric path. This may provide the advantage that the switches may be protected from electric loads. Thereby, the lifetime of the switches (and the system as a whole) may be significantly increased. In an embodiment, power modules not allocated may be ignored since their electric load in the path may be zero.

In an embodiment, the method further comprises evaluating (considering) the status of the at least one switch and/or the at least one power module, in particular wherein the status comprises at least one of the following: a damage, broken part, a frequently used part. In an embodiment, the method comprises: avoid using the at least one switch and/or the at least one power module based on the status during the shutdown operation. Thereby, an efficient operation may be enabled, sparing damaged or frequently used parts.

In an exemplary embodiment, the power management system is modularly built, offers different switching matrixes and/or offers different power module arrangements/power levels. In an embodiment, the power management system may comprise a dedicated controller connected to the power modules and the switching matrix.

In an exemplary embodiment, the described approach may enable a reduction of production time, materials and complexity. In an exemplary embodiment, the described approach may allow to configure the delay (e.g. milliseconds) (for individual shutdown) to avoid damaging the components (in particular power modules) with a stoppage event complying with the standards.

In an exemplary embodiment, the shutdown global circuit (DC-shutdown) may be a dedicated circuit that is isolated from the other circuits to avoid damage to the electronics/components. In an exemplary embodiment, the safety control device enables the possibility to shut down individually each output if the trigger (for shutdown) was on a dispenser station or the complete shutdown if the push-button is pressed at the charger station. In an embodiment, the safety control device has a matrix that allows the system to recognize which power module is allocated to each output reducing the cabling and required devices. In an embodiment, the safety control device allows the connection of the DC-shutdown global circuit between cabinets to shutdown the allocated power to the specific output. In an embodiment, the safety control device receives input of the DC-shutdown global circuit/ line and maps the DC-shutdown lines to the corresponding power modules/groups by using the mirror matrix. In an embodiment, only the power modules allocated to the specific output are shut down. In an embodiment, the safety control device receives the switch/contactors feedback from the power router device on the safety logic and mimics in the mirror matrix.

It should be noted that embodiments of the invention have been described with reference to various subject-matters. In particular, some embodiments have been described with reference to method claims, while other embodiments have been described with reference to apparatus claims. However, a skilled person will infer from the foregoing and the following description that, unless otherwise indicated, in addition to any combination of features belonging to one type of subject-matter, any combination of features relating to different subject-matter is also considered to be disclosed by this document. This is particularly the case between features of the method claims and features of the apparatus claims.

The aspects defined above and further aspects of the present invention result from the examples of embodiments to be described below and are explained by reference to the examples of embodiments. The invention is described in more detail below with reference to embodiments to which the invention is not limited.

### Brief Description of the Drawings

Figure 1 shows a safety control device for a power management system, according to an embodiment of the invention.
Figure 2 shows a power management system with the safety control device, according to an embodiment of the invention.
Figure 3 shows a complex power management system with the safety control device, according to an embodiment of the invention.
Figure 4 and Figure 5 respectively illustrate a power management system, according to embodiments of the invention.

### Detailed Description of the Drawings

The representations in the drawings are schematic. It should be noted that in different illustrations, similar or identical elements or features are provided with the same reference signs or with reference signs that differ from the corresponding reference signs only within the first digit. In order to avoid unnecessary repetition, elements or features that have already been explained in relation to a previously described embodiment are not explained again at a later point in the description.

In addition, spatially relative terms such as "front" and "back", "up" and "down", "left" and "right", etc. are used to describe the relationship of one element to another element, as shown in the figures. For example, the spatially relative terms can apply to orientations used that deviate from the orientation shown in the figures. Obviously, these spatially relative terms refer only to a simplification of the description and the orientation shown in the figures and are not necessarily limiting, since an apparatus according to an embodiment of the invention may assume orientations other than those shown in the figures, in particular when it is used.

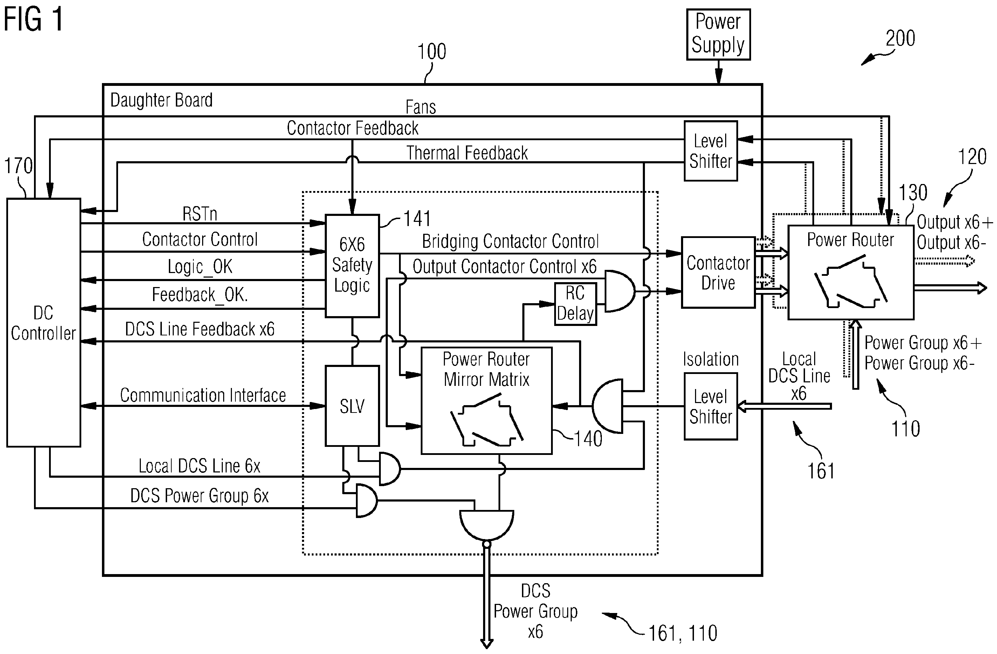

Figure 1 shows a safety control device 100 for a power management system 200, according to an embodiment of the invention. The safety control device 100 is configured as a PCB (daughter board) with a plurality of electronic components and electric connections. In this example, the safety control device 100 is electrically connected to a control system/device 170 (e.g. the DC controller) and the power router device 130 (the power router and/or "switching matrix"). The power router device 130 comprises a plurality of switches/contactors to realize a large variety of different electric paths between power modules 110 and outputs 120 of the power management system 200. It is shown that the power router device 130 is connected between the power modules 110 and the outputs 120. The safety control device 100 is further connected to the shutdown local circuit 161 (here the DCS lines). In this example, there are six DCS lines 161 that originate from a single line called the DCS global line/circuit 160. If the DCS global line 160 is triggered, then the DCS lines 161 are also triggered simultaneously.

In the example of Figure 1, a local DCS line 161 per power module 110 is applied. If all the DCS lines 161 are triggered, then all the DCS power modules 110 are triggered. If a single DCS line 161 is triggered (e.g. dispenser/output 1), then the corresponding DCS power module 110 line is triggered.

For example, referring to Figure 4 (see above), there is one DC line for output 120 and two DCS power module lines for power modules 110 and 111. If only power module 110 is connected to output 120 via switch 131 and the DCS line is triggered, then only the DC power module line for power module 110 is triggered. In another example, if both power modules 110 and 111 are connected to output 120 via switches 131 and 132, the DC line is triggered, and both DC power group lines for power modules 110 and 111 are triggered.

The safety control device 100 comprises a power router mirror device 140, configured to mimic/copy/mirror the configuration of the power router device 130. For this purpose, the power router mirror device 140 is connected, via the safety logic circuit 141, to the power router device 130. The power router mirror device 140 is further configured to map the connections of the shutdown global circuit 160 to the corresponding power modules 110. The safety control device 100 is further configured to (trigger) shut down individually of the at least one power module 110 allocated to the selected electric path associated with the safety-related issue.

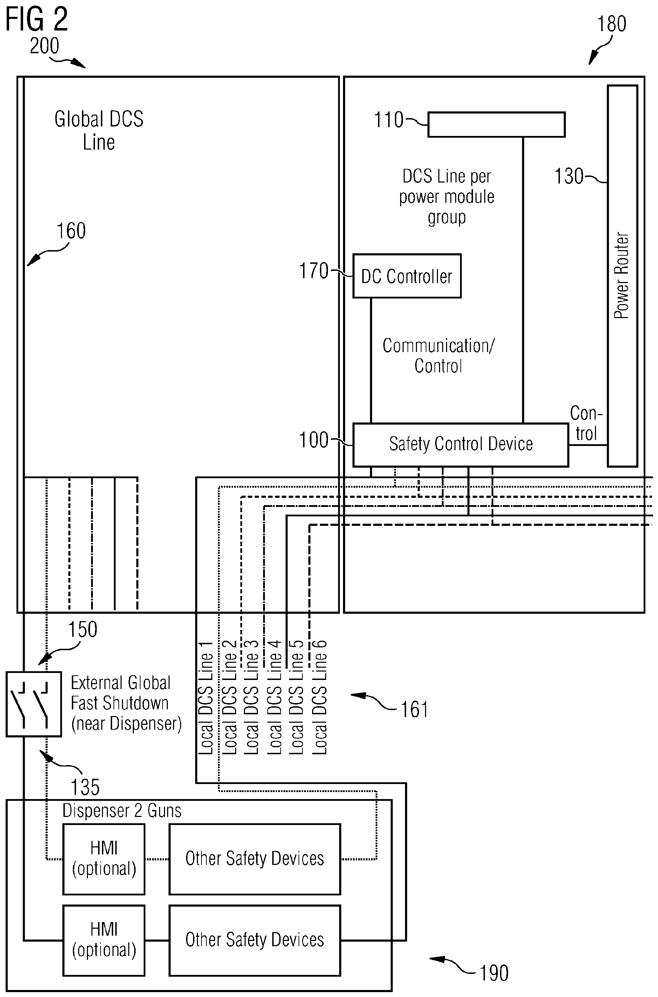

Figure 2 shows a power management system 200 with the safety control device 100, according to an embodiment of the invention. The power management system 200 comprises a main charging station 180 coupled to a dispenser station 190. The main station 180 comprises a plurality of power modules 110 (only schematically shown), the power routing device 130, and the control device 170. The dispenser station 190 comprises two outputs (charging devices) and a plurality of power modules 110 of the main station 180 are connected to said outputs of the dispenser station 190 (via the power router device 130) and the shutdown (DCS) local lines 161. It can be seen that two DCS local lines 161 are established from the main station 180 to the dispenser station 190. The two DCS local lines 161 are further guided (see 135) to the main station 180 via a shutdown device 150. This is an emergency device (activated manually and/or automatically) that opens, in case of a safety-related issue, the schematically shown switches and thereby shuts down the power in the power management system 200. It is further indicated that the DCS local lines 161 are connected to the DCS global circuit/line 160.

The power management system 200 further comprises the safety control device 100, in this example connected between the control device 170, the power router device 130, and the power modules 110. The safety control device 100 can be used in addition or alternatively to the shutdown device 150. In a preferred embodiment, the safety control device can (trigger) shutdown of an individual electric path, so that the remaining electric paths may keep on operating.

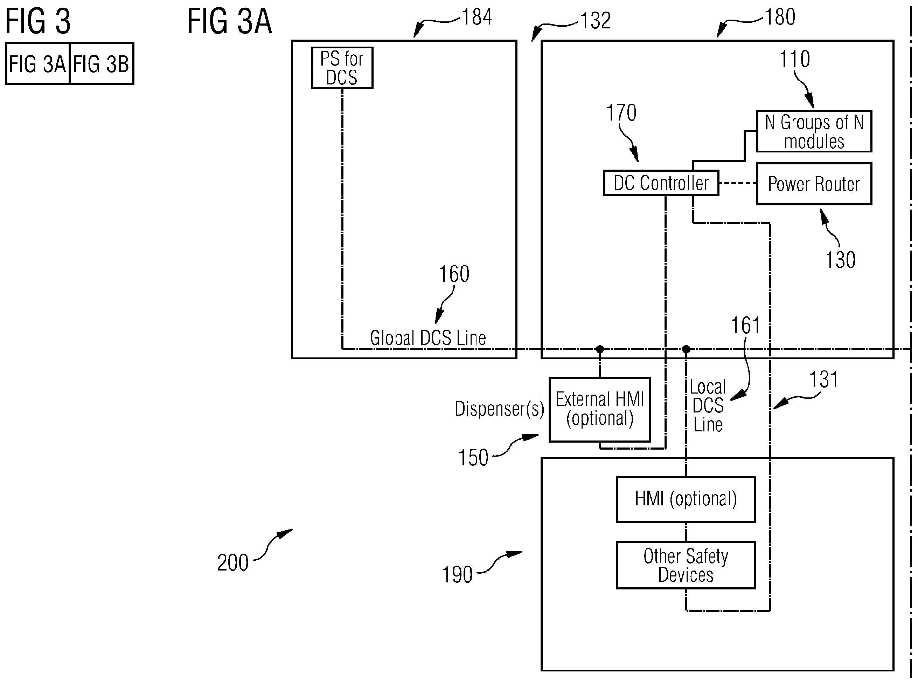

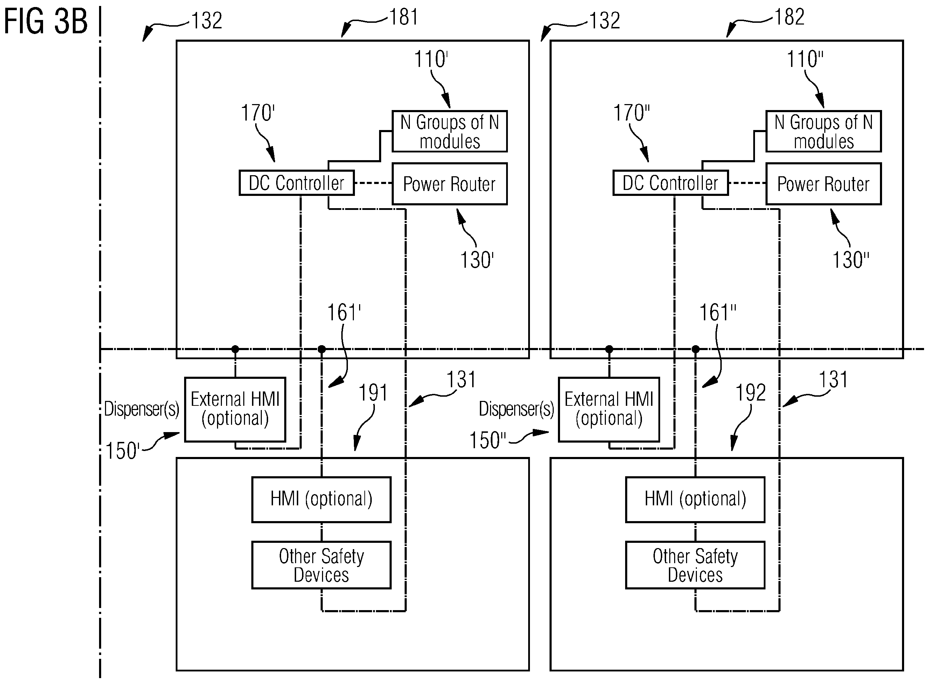

Figure 3 shows a complex power management system 200 with the safety control device 100, according to an embodiment of the invention. The system 200 comprises four main stations; three DC main stations 180, 181, 182 and one AC main station 184. The main stations 180, 181, 182, 184 are hereby connected with each other in series (reference sign 132). Further, each DC main station 180-182 is further connected to a respective dispenser station 190, 191, 192.

The shutdown global circuit 160 (global DCS line) extends through all main stations 180, 181, 182, and 184. Each of the DC main stations 180, 181, 182 comprises a group of power modules 110, a power router device 130, and a control device 170, respectively. The power modules 110 and the power router device 130 are hereby connected to the control device 170, respectively. Between each main station and the corresponding dispenser station, a shutdown local line (DCS line) 161 is established. Further, between each main station and the corresponding dispenser station, a respective human-machine interface 150 (such as an emergency push button) can be applied.

As shown in the examples of Figure 1 and 2, the safety control device 100 can be coupled between the power modules 110, the power router device 130, and the control device 170, respectively. Further, the safety control device 100 can also be coupled to the shutdown global circuit 160 and/or to the shutdown local line(s) 161. While in one example, a safety control device 100 is arranged in each DC main station 180, 181, 182, in another example, all DC main station 180, 181, 182 can share a common safety control device 100.

It should be noted that the term "comprising" does not exclude other elements or steps, and the use of the article "a" does not preclude a multitude. Elements that are described in connection with different embodiments can also be combined. It should also be noted that reference signs in the claims should not be interpreted as limiting the scope of the claims.

Regardless of the grammatical gender of a particular term, it includes people with male, female or other gender identities.

### Reference signs

- 100: Safety control device
- 110: Power module
- 111: Further power module
- 120: Output
- 130: Power router device, switching matrix
- 131: Electric path main station to dispenser station
- 132: Electric path main station to further main station
- 135: Electric path via shutdown device
- 140: Power router mirror device
- 141: Safety logic
- 150: Shutdown device
- 160: Shutdown global circuit (DCS global)
- 161: Shutdown local line/circuit (DCS line)
- 170: Control device, DC controller
- 180: Main station, charger
- 181: Further/second main station
- 182: Third main station
- 184: AC main station
- 190: Dispenser station
- 191: Further/second dispenser station
- 192: Third dispenser station
- 200: Power management system

## Claims

1. A safety control device (100) for a power management system (200) with a plurality of power modules (110) that are connectable via a power router device (130) to at least one output (120), wherein the safety control device (100) is configured to:
identify the electric paths of the power modules (110) allocated to the at least one output (120) via the power router device (130);
in case of a safety-related issue, select the respective electric path of the identified electric paths associated with the safety-related issue; and
individually shut down the selected electric path.

2. The safety control device (100) according to claim 1,
comprising a printed circuit board, PCB, and at least one semiconductor device, in particular a processor and/or a logic circuit and/or a Field-Programmable Gate Array, FGPA.

3. The safety control device (100) according to claim 1 or 2, comprising:
a power router mirror device (140), configured to mimic the configuration of the power router device (130), thereby identifying the electric paths,
in particular wherein the power router mirror device (140) is couplable to the power router device (130), in particular via a safety logic (141).

4. The safety control device (100) according to one of the preceding claims, configured to be coupled to at least one of the following devices of the power management system (200):
a control device (170), in particular a DC controller,
a shutdown device (150),
a shutdown global circuit (160),
a shutdown local line (161),
the power router device (130);
the plurality of power modules (110).

5. The safety control device (100) according to one of the preceding claims,
wherein the power router mirror device (140) is configured to map the connections of the shutdown global circuit (160) and/or at least one shutdown local line (161) to the corresponding power modules (110); and/or
wherein the safety control device (100) is configured to shutdown individually the at least one power module (110) allocated to the selected electric path associated with the safety-related issue.

6. A power management system (200), comprising:
a safety control device (100) according to one of the preceding claims;
the plurality of power modules (110);
the at least one output (120);
the power router device (130), configured to connect the plurality of power modules (110) and the at least one output (120) for providing the electric paths.

7. The power management system (200) according to claim 6, comprising:
a main station (180) comprising the plurality of power modules (110); and
at least one dispenser station (190), coupled to the main station (180), and comprising the at least one output (120);
in particular wherein at least one identified electric path (131) connects at least one power module (110) of the main station (180) with the at least one output (120) of the dispenser station (190).

8. The power management system (200) according to claim 7, further comprising:
a further main station (181) comprising a further plurality of power modules (111); and
at least one further dispenser station (191), coupled to the further main station (181), and comprising at least one further output (121),
in particular wherein at least one further identified electric path connects at least one further power module (111) of the further main station (181) with at least one further output (121) of the further dispenser station (191) and/or with the main station (180).

9. The power management system (200) according to claim 8,
wherein the main station (180) comprises the safety control device (100) and the further main station (181) comprises a further safety control device; or
wherein the main station (180) and the further main station (181) comprise the safety control device (100) as a common device.

10. The power management system (200) according to one of the claims 6 to 9, further comprising:
a shutdown device (150) and/or a shutdown global circuit (160) and/or at least one shutdown local line (161), configured to shut down the electric power, in particular all power modules (110) of the plurality of power modules (110).

11. The power management system (200) according to one of the preceding claims 6 to 10, configured so that
the safety control device (100) is, in particular exclusively, applied in case of a safety-related issue with respect to the at least one dispenser station (190); and/or
the shutdown device (150) and/or the shutdown global circuit (160) is, in particular exclusively, applied in case of a safety-related issue with respect to the at least one main station (180).

12. The power management system (200) according to one of the preceding claims 6 to 11, comprising at least one of the following features:
wherein the power management system (200) is configured for an electromobility, in particular electric vehicle charging, application;
wherein the output (120) comprises at least one of: a charging cable, a connector, a connector to a charging cable, a plug, an interface;
wherein the power router device (130) comprises at least two switches, in particular including a first switch to connect at least one power module (110) to the output (120) and/or a second switch to connect at least two power modules (110);
wherein at least one of the switches (130) is configured as at least one of a contactor, a relay, a connector/disconnector, selector, breaker;
wherein at least one of the power modules (110) comprises at least one of: an AC/DC converter, a DC/DC converter, a DC/AC converter;
wherein the safety-related issue comprises at least one of the following: a short circuit, an overcurrent, an overvoltage, a thermal overload, a fire risk, a ground fault, a leakage current, a material failure, an insulation fault;
wherein the safety control device (100) is arranged in the main station (180) and/or the further main station (181);
wherein the safety control device (100) is connected to, in particular coupled between, the control device (170), the power router device (130), the shutdown global circuit (160), at least one shutdown local line (161).

13. A method of operating a safety control device (100) for a power management system (200) with a plurality of power modules (110) that are connectable via a power router device (130) to at least one output (120), wherein the method comprising:
identifying the electric paths of the power modules (110) allocated to the at least one output (120) via the power router device (130);
in case of a safety-related issue, selecting the respective electric path of the identified electric paths associated with the safety-related issue; and
individually shutting down the selected electric path.

14. The method according to claim 13, further comprising:
individually shutting down the selected electric path, in particular the allocated at least one power module (110), when the safety-related issue is associated with a dispenser station (190); and
shutting down all electric paths, in particular all power modules (110), when the safety-related issue is associated with a main station (180), in particular by a shutdown device (150) and/or a shutdown global circuit (160) and/or at least one shutdown local line (161).

15. A computer program product, configured to perform, when used on a computer, in particular comprising at least one processor, a method according to claim 13 or 14.
